# FASCICULE DE BREVET EUROPEEN

(11) **EP 1 900 053 B1**
(45) Date de publication et mention de la délivrance du brevet: **11.12.2013**
(21) Numéro de dépôt: 06778659.0
(22) Date de dépôt: 23.06.2006
(51) Int. Cl.: H01M 8/24, H01M 8/02

(54) **PLAQUE MONOPOLAIRE D'EXTREMITE D'UNE PILE A COMBUSTIBLE ET PILE A COMBUSTIBLE COMPRENANT UNE TELLE PLAQUE**
END-MONOPOLARPLATTE FÜR BRENNSTOFFZELLE UND EINE SOLCHE PLATTE ENTHALTENDE BRENNSTOFFZELLE
MONOPOLAR FUEL CELL ENDPLATE AND FUEL CELL COMPRISING SAME

(30) Priorité: 28.06.2005 FR 0506602
(43) Date de publication de la demande: 19.03.2008
(73) Titulaire: PEUGEOT CITROËN AUTOMOBILES S.A., 78140 Vélizy Villacoublay (FR); Commissariat à l'Énergie Atomique et aux Énergies Alternatives, 75015 Paris (FR)
(72) Inventeur: ROY, Francis, F-91940 Les Ulis (FR); POIROT-CROUVEZIER, Jean-Philippe, F-38450 Saint Georges De Commiers (FR)
(74) Mandataire: Ménès, Catherine
(86) Numéro de dépôt international: PCT/FR2006/001462
(87) Numéro de publication internationale: WO 2007/003745

(56) Documents cités:
- WO-A-2004/032267
- FR-A- 2 844 922
- US-A1- 2003 194 597

## Description

La présente invention est relative à une plaque monopolaire d'extrémité d'une pile à combustible du type à membrane échangeuse de protons.

Une pile à combustible à membrane échangeuse de protons est un dispositif de production d'électricité par réaction électrochimique entre un carburant, par exemple un gaz contenant de l'hydrogène, et un comburant, par exemple un gaz contenant de l'oxygène, séparés par une paroi constituée d'un électrolyte solide.

Dans un tel dispositif, lorsque le carburant est un gaz hydrogéné et le comburant un gaz oxygéné, le gaz hydrogéné et le gaz oxygéné réagissent pour former de l'eau tout en générant un courant électrique qui peut être utilisé pour des usages divers.

D'une façon générale, une pile à combustible est constituée d'un empilement de cellules réactives ou cellules élémentaires constituées chacune d'un ensemble membrane électrode inséré entre deux plaques bipolaires comportant des canaux destinés à assurer la circulation, d'une part, d'un carburant, d'autre part d'un comburant, et enfin d'un fluide caloporteur tel que de l'eau. L'ensemble membrane électrode est un matériau multicouche, connu en lui-même, comprenant une couche constituée d'une membrane d'électrolyte solide proprement dite disposée entre deux couches actives constituant, d'une part; une cathode, d'autre part, une anode, revêtues elles-mêmes de deux couches externes et d'une couche de diffusion.

L'empilement de cellules élémentaires est généralement maintenu serré entre deux plaques terminales bridées par des goujons s'étendant d'une plaque terminale à l'autre et traversant l'empilement de cellules élémentaires.

A l'une des extrémités de la pile à combustible, on trouve une plaque monopolaire anodique, plaquée à un collecteur de courant, et, à l'autre extrémité, une plaque monopolaire cathodique plaquée à un autre collecteur de courant. L'ensemble est maintenu mécaniquement par les plaques terminales et des tirants d'assemblage.

Généralement, les plaques monopolaires d'extrémité sont réalisées dans des matériaux offrant une bonne aptitude à la résistance à la corrosion et ayant une bonne conductivité électrique, tels que par exemple des matériaux carbonés comme le graphite, le graphite imprégné de polymère ou des feuilles de graphite souples.

Ces pièces sont généralement mises en forme par usinage ou par moulage, de façon à définir, d'une part, sur une face active, des canaux de circulation pour les gaz réactifs et, sur la face opposée, une surface de contact avec les plaques collectrices de courant. US 20030194597 décrit des plaques d'extrémité.

Cette technique présente l'inconvénient en particulier de nécessiter la réalisation de plaques monopolaires d'extrémité spécifiques qui se distinguent des plaques bipolaires réalisées pour l'ensemble de l'empilage de la pile. Il en résulte une augmentation significative des coûts.

Le but de la présente invention est de remédier à cet inconvénient en proposant une plaque monopolaire d'extrémité pour une pile à combustible à membrane échangeuse de protons qui comporte des plaques bipolaires constituées d'assemblages de demi-plaques bipolaires obtenues par emboutissage, et qui puissent être fabriquées par des procédés plus économiques que les procédés de fabrication de plaques monopolaires d'extrémité connues.

A cet effet, l'invention a pour objet une plaque monopolaire d'extrémité d'une pile à combustible du type à membrane échangeuse de protons, constituée d'une demi-plaque monopolaire cathodique ou anodique accolée à une plaque de fermeture, la demi-plaque monopolaire comportant, dans sa partie centrale, une zone active cathodique ou anodique et, à sa périphérie, au moins deux boîtes à comburant, si la demi-plaque monopolaire est cathodique, ou à carburant, si la demi-plaque monopolaire est anodique, chaque boîte à comburant ou à carburant comportant au moins un canal débouchant à l'extérieur de la zone active pour permettre la circulation du comburant ou du carburant à l'extérieur de la plaque monopolaire du côté de la demi-plaque monopolaire, les boîtes à comburant ou à carburant ne comportant pas d'ouverture débouchant dans la zone centrale de la plaque de fermeture, de telle sorte que la partie centrale de ladite plaque de fermeture ne puisse être balayée ni par le carburant ni par le comburant.

De préférence, au moins la demi-plaque monopolaire comporte, à sa périphérie, au moins deux boites à fluide caloporteur, et la partie centrale de la demi-plaque monopolaire et la partie centrale de la plaque de fermeture délimitent entre elles un espace de circulation du fluide caloporteur en communication par des canaux de liaison avec les boites à fluide caloporteur.

La partie centrale de la plaque de fermeture peut être identique à la partie centrale d'une demi-plaque monopolaire cathodique ou anodique selon que la demi-plaque monopolaire à laquelle elle est accolée est anodique ou cathodique, respectivement.

La plaque de fermeture peut être une plaque collectrice de courant.

De préférence, au moins un assemblage d'extrémité comprend une plaque monopolaire d'extrémité selon l'invention et, un moyen de collecte de courant électrique.

Le moyen de collecte de courant est, par exemple, une plaque collectrice de courant venant en contact de la plaque de fermeture de la plaque monopolaire d'extrémité.

L'assemblage d'extrémité peut comprendre en outre un joint entre périphérique assurant l'étanchéité entre la plaque monopolaire d'extrémité et moyen de collecte de courant électrique, et une plaque terminale.

L'invention va maintenant être décrite de façon plus précise mais non limitative en regard des dessins annexés, dans lesquels :
- la figure 1 est une vue en perspective éclatée vue de trois-quarts arrière d'un assemblage d'extrémité d'une pile à combustible à membrane échangeuse de protons ; et
- la figure 2 est une vue en perspective éclatée vue de trois-quarts avant du même assemblage d'extrémité d'une pile à combustible que celui qui est représenté à la figure 1.

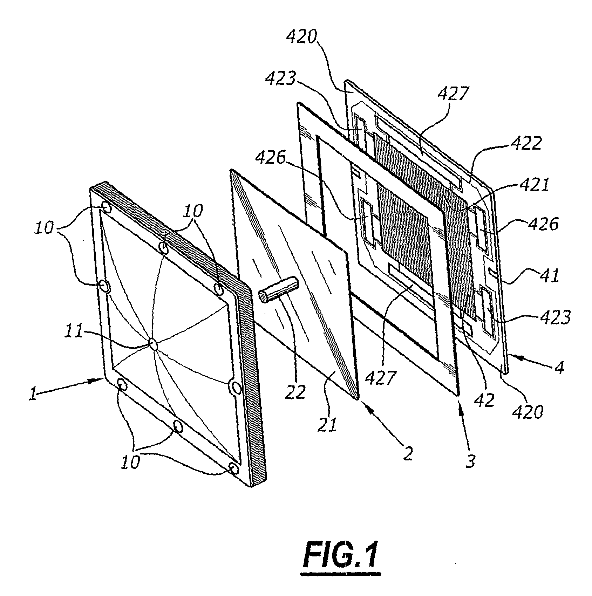

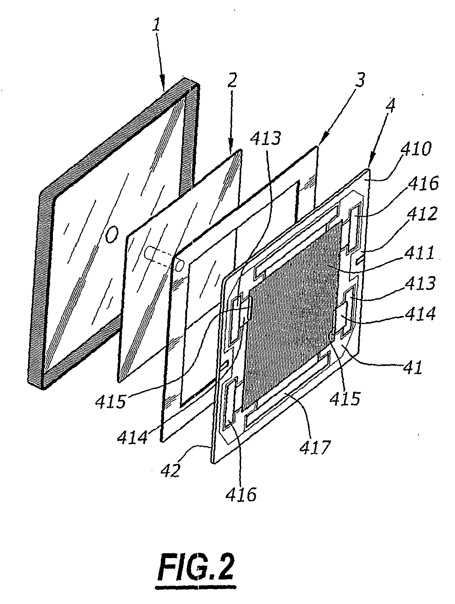

L'assemblage d'extrémité d'une pile à combustible représenté aux figures 1 et 2 est constitué d'un empilement d'une plaque terminale 1, d'une plaque collectrice de courant 2, d'un joint périphérique 3, et d'une plaque monopolaire d'extrémité 4 qui comprend une face active 41 destinée à coopérer avec un assemblage membrane électrode réactif, et une face arrière de fermeture 42 qui est destinée à être en contact avec la plaque collectrice de courant 2.

La plaque monopolaire d'extrémité 4 est constituée de l'assemblage de deux demi-plaques 410 et 420. La demi-plaque 410 correspondant à la face active 41 est une demi-plaque monopolaire cathodique ou anodique selon que l'assemblage d'extrémité est un assemblage destiné à être placé à l'extrémité cathodique ou à l'extrémité anodique, respectivement, de la pile à combustible. Cette demi-plaque monopolaire cathodique ou anodique est identique à une demi-plaque monopolaire cathodique ou anodique d'une plaque bipolaire de la pile à combustible.

La demi-plaque monopolaire cathodique ou anodique 410 comporte une partie centrale active 411 constituée de canaux obtenus par emboutissage entourée d'un cadre périphérique 412, comportant des ouvertures 413 destinées à recevoir un fluide actif qui est soit du comburant, si la demi-plaque monopolaire est une demi-plaque cathodique, soit du carburant, si la demi-plaque est une demi-plaque anodique.

Ces ouvertures 413 qui sont destinées à faire circuler le fluide actif longitudinalement le long de la pile à combustible, sont reliées, par l'intermédiaire de canaux 414, à des ouvertures 415 qui débouchent à l'extérieur de la demi-plaque monopolaire de façon à permettre de faire circuler du fluide actif arrivant par les ouvertures collectrices 413 qui constituent des boîtes à fluide à la surface de la zone active centrale 411 de la demi-plaque monopolaire.

La demi-plaque monopolaire comporte également des ouvertures périphériques 416 destinées à former des boîtes à fluide actif complémentaire du fluide actif qui est alimenté par les boîtes à fluide 413. Lorsque la demi-plaque monopolaire 410 est cathodique, les boîtes à fluide 416 sont destinées à alimenter la pile en carburant et, inversement, lorsque la demi-plaque monopolaire est anodique, les boîtes à fluide 416 sont destinées à véhiculer le comburant. Ces boîtes à fluide 416 ne débouchent pas à la surface de la demi-plaque monopolaire, si bien qu'avec cette disposition, lorsque la pile est alimentée en fluide, la surface active 411 de la demi-plaque monopolaire 410 est alimentée uniquement dans le fluide qui correspond à la nature de la demi-plaque de la plaque monopolaire d'extrémité considérée.

La deuxième face 42 de la plaque monopolaire d'extrémité 4 est constituée par une plaque monopolaire 420, complémentaire de la plaque monopolaire 410 située sur la face active, qui comprend une zone centrale 421 identique à une zone centrale active d'une plaque bipolaire, cette plage centrale active 421 étant du type cathodique si la zone active centrale 411 de la demi-plaque monopolaire 410 est anodique, et inversement, si la demi-plaque 410 est cathodique. La demi-plaque 420 comporte une périphérie 422 qui entoure la plage centrale 421. Cette périphérie 422 comporte, comme la demi-plaque monopolaire 410, des ouvertures correspondantes 423 et 426 qui sont destinées à coopérer avec les ouvertures 413 et 416 de la demi-plaque monopolaire 410 afin de former les boîtes à fluide actif. Cette demi-plaque 420 qui constitue une plaque de fermeture se distingue d'une demi-plaque monopolaire uniquement par le fait qu'aucune des ouvertures 423 et 426 constituant des boîtes à fluide ne débouche à l'extérieur de la zone centrale 421.

De ce fait, les fluides actifs transportés par les boîtes à fluide formées par les ouvertures 423 et 426 ne peuvent pas venir lécher la surface extérieure de la zone centrale 421 de cette plaque de fermeture.

Les deux zones centrales actives 411 et 421 de la demi-plaque monopolaire 410 et de la plaque de fermeture 420 délimitent entre elles un espace permettant la circulation d'un fluide caloporteur. Cet espace est alimenté en fluide caloporteur par l'intermédiaire d'ouvertures 417 et 427 prévues dans les périphéries de la demi-plaque monopolaire 410 et de la plaque de fermeture 420 et destinées à former des boîtes pour fluide de refroidissement, ces boîtes de fluide de refroidissement étant en communication avec l'espace délimité entre les deux zones centrales de la demi-plaque monopolaire et de la plaque de fermeture par des canaux de communication.

L'ensemble des plaques obtenues sont des plaques réalisées en métal, découpées et embouties de façon à obtenir les formes souhaitées, et la demi-plaque monopolaire accolée à la plaque de fermeture est assemblée à celle-ci par soudage par exemple par soudage laser effectué notamment à la périphérie des plaques.

On notera en outre que la périphérie de la plaque monopolaire d'extrémité qui vient d'être décrite est prévue de façon à pouvoir recevoir un joint 3 qui assure l'étanchéité de l'ensemble.

La plaque collectrice de courant 2 est une plaque métallique plane destinée à venir en contact avec la face arrière de la plaque de fermeture 420 de façon à collecter le courant électrique généré par la pile à combustible. Cette plaque collectrice comporte, dans sa partie centrale, un plot de connexion 22 permettant de connecter la pile à combustible à un circuit d'utilisation.

Enfin, la plaque terminale 1 est une plaque dont le rôle est essentiellement mécanique. Elle comporte, à sa périphérie, une pluralité d'ouvertures 10 destinées à recevoir par exemple des tirants servant à assurer le serrage de l'empilement qui constitue la pile à combustible, entre une plaque terminale du côté cathodique et la plaque terminale du côté anodique. Cette plaque terminale comporte également en son centre un trou 11 destiné à laisser passer le plot de connexion électrique 22 de façon à pouvoir assurer une connexion électrique de la pile à combustible vers l'extérieur.

L'empilement qui vient d'être décrit peut être réalisé avec différentes variantes, en particulier les ouvertures prévues à la périphérie de la plaque monopolaire et qui ne sont pas destinées à alimenter cette plaque en un fluide actif, peuvent être fermées.

En outre, par exemple, le plot de connexion extérieure de la pile à combustible peut être directement fixé sur la plaque de fermeture de la plaque monopolaire d'extrémité. Dans ce cas, la plaque de fermeture constitue elle-même la plaque collectrice de courant.

## Revendications

1. Plaque monopolaire d'extrémité (4) d'une pile à combustible du type à membrane échangeuse de protons, **caractérisée en ce qu'**elle est constituée d'une demi-plaque monopolaire (41) cathodique ou anodique accolée à une plaque de fermeture (42), la demi-plaque monopolaire comportant dans sa partie centrale, une zone active (411) cathodique ou anodique, et, à sa périphérie, au moins deux boites (413) à comburant, si la demi-plaque monopolaire est cathodique, ou à carburant, si la demi-plaque monopolaire est anodique, chaque boîte à carburant ou à comburant comportant au moins un canal (414) débouchant à l'extérieur de la zone active (411) pour permettre la circulation du comburant ou du carburant à l'extérieur de la plaque monopolaire du côté de la demi-plaque monopolaire, les boites à comburant ou à carburant ne comportant pas d'ouverture débouchant dans la zone centrale de la plaque de fermeture, de telle sorte que la partie centrale de ladite plaque de fermeture ne puisse être balayée ni par le carburant ni par le comburant.

2. Plaque monopolaire selon la revendication 1, **caractérisée en ce qu'**au moins la demi-plaque monopolaire (41) comporte, à sa périphérie, au moins deux boites à fluide caloporteur (417), et **en ce que** la partie centrale (411) de la demi-plaque monopolaire (41) et la partie centrale (421) de la plaque de fermeture (42) délimitent entre elles un espace de circulation du fluide caloporteur en communication par des canaux de liaison avec les boites à fluide caloporteur.

3. Plaque monopolaire selon la revendication 2, **caractérisée en ce que** la partie centrale (411) de la plaque de fermeture (42) est identique à la partie centrale d'une demi-plaque monopolaire cathodique ou anodique selon que la demi-plaque monopolaire à laquelle elle est accolée est anodique ou cathodique, respectivement.

4. Plaque monopolaire selon l'une quelconque des revendications 1 à 3, **caractérisé en ce que** la plaque de fermeture est une plaque collectrice de courant.

5. Pile à combustible du type comprenant un empilement alterné de membranes électrodes et de plaques bipolaires enserrées entre un assemblage d'extrémité cathodique et un assemblage d'extrémité anodique, **caractérisée en ce qu'**au moins un assemblage d'extrémité comprend une plaque monopolaire d'extrémité (4), selon l'une quelconque des revendications 1 à 4, et un moyen de collecte de courant électrique.

6. Pile à combustible selon la revendication 5, **caractérisée en ce que** le moyen de collecte de courant est une plaque collectrice de courant (2) venant en contact de la plaque de fermeture (42) de la plaque monopolaire d'extrémité.

7. Pile à combustible selon la revendication 5 ou la revendication 6, **caractérisée en ce que** l'assemblage d'extrémité comprend en outre un joint entre périphérique (3) assurant l'étanchéité entre la plaque monopolaire d'extrémité (4) et le moyen de collecte de courant (2) électrique, et une plaque terminale (1).

## Patentansprüche

1. Monopolarendplatte (4) einer Brennstoffzelle vom Typ mit Protonen-Austausch-Membran, **dadurch gekennzeichnet, dass** sie aus einer kathodischen oder anodischen Monopolarplattenhälfte (41) besteht, die an eine Verschlussplatte (42) angefügt ist, wobei die Monopolarplattenhälfte in ihrem Mittelteil eine kathodische oder anodische aktive Zone (411) und an ihrem Rand wenigstens zwei Gehäuse (413) mit Sauerstoffträger, wenn die Monopolarplattenhälfte kathodisch ist, oder mit Kraftstoff, wenn die Monopolarplattenhälfte anodisch ist, umfasst, wobei jedes Gehäuse mit Kraftstoff oder mit Sauerstoffträger wenigstens einen Kanal (414) umfasst, der in den Außenbereich der aktiven Zone (411) mündet, um das Zirkulieren des Sauerstoffträgers oder des Kraftstoffes im Außenbereich der Monopolarplatte auf Seite der Monopolarplattenhälfte zu ermöglichen, wobei die Gehäuse mit Sauerstoffträger oder mit Kraftstoff keine Öffnung aufweisen, die in den Mittelbereich der Verschlussplatte mündet, so dass der Mittelteil der Verschlussplatte weder vom Kraftstoff noch vom Sauerstoffträger überstrichen werden kann.

2. Monopolarplatte nach Anspruch 1, **dadurch gekennzeichnet, dass** wenigstens die Monopolarplattenhälfte (41) an ihrem Rand wenigstens zwei Gehäuse mit Wärmeträger (417) umfasst, und dadurch, dass der Mittelteil (411) der Monopolarplattenhälfte (41) und der Mittelteil (421) der Verschlussplatte (42) zwischen ihnen einen Raum zum Zirkulieren des Wärmeträgers begrenzen, der über Verbindungskanäle mit den Gehäusen mit Wärmeträger verbunden ist.

3. Monopolarplatte nach Anspruch 2, **dadurch gekennzeichnet, dass** der Mittelteil (421) der Verschlussplatte (42) und der Mittelteil einer kathodischen oder anodischen Monopolarplattenhälfte, je nach dem, ob die Monopolarplattenhälfte, an die sie angefügt ist, jeweils anodisch oder kathodisch ist, identisch sind.

4. Monopolarplatte nach einem der Ansprüche 1 bis 3, **dadurch gekennzeichnet, dass** die Verschlussplatte eine Stromkollektorplatte ist.

5. Brennstoffzelle vom Typ mit einem Stapel aus abwechselnd Elektrodenmembranen und Bipolarplatten, die zwischen einer kathodischen Endanordnung und einer anodischen Endanordnung eingeschlossen sind, **dadurch gekennzeichnet, dass** wenigstens eine Endanordnung eine Monopolarendplatte (4) nach einem der Ansprüche 1 bis 4 und ein elektrisches Stromkollektormittel umfasst.

6. Brennstoffzelle nach Anspruch 5, **dadurch gekennzeichnet, dass** das Stromkollektormittel eine Stromkollektorplatte (2) ist, die mit der Verschlussplatte (42) der Monopolarendplatte in Kontakt ist.

7. Brennstoffzelle nach Anspruch 5 oder 6, **dadurch gekennzeichnet, dass** die Endanordnung ferner eine Randdichtung (3), die die Dichtheit zwischen der Monopolarendplatte (4) und dem elektrischen Stromkollektormittel (2) sicherstellt, und eine Deckplatte (1) umfasst.

## Claims

1. Monopolar fuel cell endplate (4) of the type with a proton exchanging membrane, **characterised in that** it is comprised of a cathode or anode monopolar half-plate (41) attached to a closure plate (42), with the monopolar half-plate comprising in its central part, a cathode or anode active region (411), and, at its periphery, at least two oxidant boxes (413), if the monopolar half-plate is cathodic, or fuel boxes, if the monopolar half-plate is anodic, with each oxidant or fuel box comprising at least one channel (414) emerging outside the active region (411) to enable oxidant or fuel to be circulated outside the monopolar plate on the monopolar plate side, with the oxidant or fuel boxes not comprising an opening emerging into the central region of the closure plate, in such a way that the central part of said closure plate cannot be swept by the fuel or by the oxidant.

2. Monopolar plate according to claim 1, **characterised in that** at least the monopolar half-plate (41) comprises, at its periphery, at least two coolant boxes (417), and **in that** the central part (411) of the monopolar half-plate (41) and the central part (421) of the closure plate (42) defines therebetween a space for circulation of the coolant in communication through connecting ducts with the coolant boxes.

3. Monopolar plate according to claim 2, **characterised in that** the central part (421) of the closure plate (42) is identical to the central part of a cathode or anode monopolar half-plate according to whether the monopolar half-plate to which it is attached is anodic or cathodic, respectively.

4. Monopolar plate according to any of claims 1 to 3, **characterised in that** the closure plate is a current collecting plate.

5. Fuel cell of the type comprising an alternating stack of electrode membranes and bipolar plates sandwiched between a cathode end assembly and an anode end assembly, **characterised in that** at least one end assembly comprises a monopolar endplate (4), according to any of claims 1 to 4, and a means for collecting electrical current.

6. Fuel cell according to claim 5, **characterised in that** the means for collecting current is a current collecting plate (2) coming into contact with the closure plate (42) of the monopolar endplate.

7. Fuel cell according to claim 5 or claim 6, **characterised in that** the end assembly further comprises a seal between peripheral (3) providing the sealing between the monopolar endplate (4) and the means for collecting electric current (2), and an endplate (1).
